# FASCICULE DE BREVET EUROPEEN

(11) **EP 3 945 033 B1**
(45) Date de publication et mention de la délivrance du brevet: **07.09.2022**
(21) Numéro de dépôt: 21181171.6
(22) Date de dépôt: 23.06.2021
(51) Int. Cl.: B64D 29/00, F02C 7/25, B64C 7/02, B64D 45/00, B64D 29/02, B64D 29/08

(54) **ENSEMBLE PROPULSIF POUR AÉRONEF**
FLUGZEUGANTRIEBSEINHEIT
AIRCRAFT PROPULSION UNIT

(30) Priorité: 27.07.2020 FR 2007881
(43) Date de publication de la demande: 02.02.2022
(73) Titulaire: AIRBUS OPERATIONS (S.A.S.), 31060 Toulouse (FR)
(72) Inventeur: SOULIE, Adeline, 31060 TOULOUSE (FR); GUICHOT, Arnaud, 31060 TOULOUSE (FR); BRACHET, Nicolas, 31700 BLAGNAC (FR); CAYSSIALS, Julien, 31060 TOULOUSE (FR)
(74) Mandataire: Gicquel, Olivier Yves Gérard

(56) Documents cités:
- EP-A2- 2 537 756
- FR-A1- 3 048 957
- FR-A1- 3 060 652
- US-A- 4 471 609

## Description

La présente demande se rapporte à un ensemble propulsif pour aéronef comprenant un moteur caréné et présentant une ou plusieurs zones du moteur dans lesquelles un feu est susceptible de naître, dites zones feu du moteur, dont le volume est réduit par rapport aux zones feu moteur de l'art antérieur.

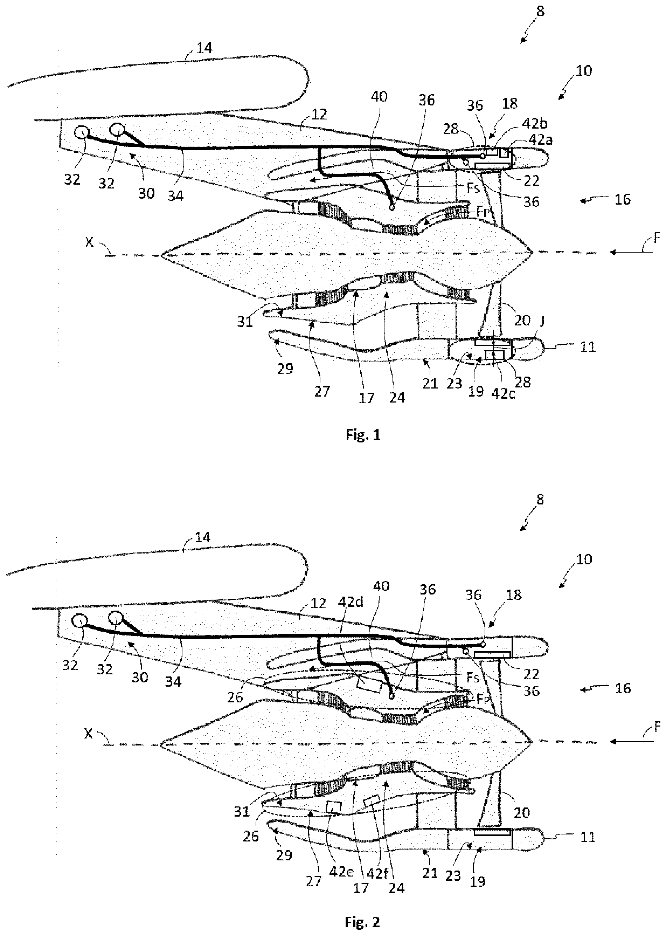

De façon conventionnelle, et comme représenté sur les figures 1 et 2, un ensemble propulsif 8 comporte un mât 12 qui est fixé sous une aile 14 de l'aéronef, et une turbomachine 10 fixée au mât 12. La turbomachine 10 comporte un moteur 16 et une nacelle 18 entourant le moteur 16. Le moteur 16 comporte, d'amont en aval selon la direction des flux d'air F dans la nacelle 18, une soufflante 20, entourée d'un carter de soufflante 22, et un corps 24 de moteur entouré d'un carter de moteur 17, relié à la soufflante 20 et permettant, en fonctionnement, d'entrainer celle-ci en rotation. La nacelle 18 comporte deux capots moteur 19 entourant la soufflante 20 et correspondant à une partie avant du moteur 16, et des capots inverseurs 21 entourant le corps 24 de moteur et matérialisant une partie arrière du moteur 16.

Le moteur 16 de la turbomachine 10 présente une ou plusieurs zones dans lesquelles un feu est susceptible de naître : une première zone feu 26 correspondant à la zone du corps 24 de moteur, et, pour un moteur présentant un risque de feu dans la zone de la soufflante 20, une deuxième zone feu 28 correspondant à la zone de la soufflante 20.

Par mesure de sécurité, la turbomachine 10 est munie d'un système de détection (non représenté sur les figures) configuré pour détecter un feu dans les zones présentant un risque de feu.

La turbomachine 10 est également munie d'un système d'extinction 30 permettant, une fois un feu détecté, de décharger un agent d'extinction vers la ou les zones feu du moteur concernées, de manière à éteindre le feu.

Ce système d'extinction 30 est composé, pour chaque moteur 16, d'au moins deux réservoirs 32 contenant un agent d'extinction qui sont installés dans le mât 12 supportant le moteur 16 de l'aéronef, ainsi que d'un système de diffusion, composé notamment de canalisations 34, connecté aux réservoirs 32, et acheminant l'agent d'extinction vers la ou les zones feu du moteur, l'agent d'extinction étant distribué par des buses 36 dans la ou les zones feu concernées.

L'agent d'extinction est ensuite réparti dans toute la ou les zones feu du moteur au moyen de la ventilation du moteur, jusqu'à atteindre une concentration volumique qui permet l'extinction du feu.

Le volume d'agent d'extinction nécessaire à l'extinction d'un feu moteur est variable d'un moteur à l'autre. Ce volume dépend principalement du volume d'air dans la ou les zones feu du moteur où un feu peut se déclarer (zone du corps de moteur uniquement, ou à la fois dans la zone du corps de moteur et dans la zone de la soufflante, en fonction des risques de feu identifiés) et de la ventilation dans ces zones feu.

Le volume d'une zone feu du moteur à éteindre dépend de la forme aérodynamique du carénage du moteur 16 (i.e. de la forme de la nacelle 18) et des équipements installés dans cette zone. Ce volume se calcule en considérant le volume de la zone feu du moteur considéré et en y retranchant tous les équipements qui sont installés dans cette zone (i.e. des équipements moteur, canalisations, harnais moteur...).

Toutefois, afin de conserver une forme aérodynamique de la nacelle 18 et un fonctionnement optimal du moteur 16, le cloisonnement de la ou des zones feu du moteur et les équipements moteur ne peuvent être déplacés afin de réduire le volume d'une zone feu du moteur. FR 3 060 652 A1 divulgue un ensemble propulsif où la paroi interne d'un capot de soufflante est recouverte d'une peinture intumescente qui s'épaissit dans une zone de feu médiane lorsque la température dépasse une valeur prédéterminée afin d'étouffer le feu par constriction.

La présente invention vise à remédier à tout ou partie des inconvénients de l'art antérieur. En particulier, la présente invention vise à fournir un ensemble propulsif dans lequel le volume d'une zone feu du moteur est optimisé, et donc nécessitant un volume et une quantité d'agent d'extinction réduits en cas de feu moteur.

A cet effet, l'invention a pour objet un ensemble propulsif pour aéronef comprenant un moteur, une nacelle agencée autour du moteur selon un axe longitudinal commun, et un mât supportant le moteur, la nacelle incluant deux capots moteur de section transversale en forme de « C » articulés sur le mât et aptes à être reliés l'un à l'autre en position fermée, et des capots inverseurs suivant les capots moteur le long de l'axe longitudinal, chaque capot présentant une peau interne.

Selon l'invention, l'un au moins des capots de la nacelle comprend au moins un caisson agencé dans un espace situé entre la peau interne dudit capot et le moteur, le caisson délimitant un volume de matière inerte, la matière inerte étant de la mousse ignifugée.

Avantageusement, le caisson obture partiellement une zone où un feu moteur est susceptible de naître, ce qui permet de limiter le volume d'une zone feu du moteur. En effet, le caisson se loge dans un espace habituellement rempli d'air et où peut donc se propager un feu moteur. Le volume de la zone feu du moteur selon l'invention est ainsi réduit par rapport au volume de la zone feu selon l'art antérieur, et la quantité d'agent d'extinction qui est nécessaire pour éteindre un feu dans la zone feu concernée est diminuée. Le volume des réservoirs d'agent d'extinction, ainsi que leur masse, peut ainsi être réduit, ce qui facilite l'intégration des réservoirs d'agent d'extinction sur l'aéronef.

Selon une caractéristique, le au moins un caisson est formé par une tôle pliée et soudée, et comporte des bords qui sont fixés de manière amovible sur la peau interne du capot de la nacelle. Le caisson est ainsi avantageusement amovible, et peut être remplacé en cas de dommages.

Selon une caractéristique, la liaison entre les bords du caisson et la peau interne du capot de la nacelle est étanche.

En variante, le caisson et le capot de la nacelle sont monoblocs.

D'autres caractéristiques et avantages ressortiront de la description de l'invention qui va suivre, description donnée à titre d'exemple uniquement, en regard des dessins annexés parmi lesquels :
La figure 1 est une vue en coupe d'un ensemble propulsif pour aéronef selon un mode de réalisation de l'invention,
La figure 2 est une vue en coupe d'un ensemble propulsif pour aéronef selon un autre mode de réalisation de l'invention, et
La figure 3 est une vue en perspective d'un ensemble propulsif pour aéronef selon un mode de réalisation de l'invention.

Comme représenté sur les figures 1 et 2, un ensemble propulsif 8 comporte un mât 12 fixé sous une aile 14 d'un aéronef et une nacelle 18 fixée au mât 12 et dans laquelle est logée une turbomachine 10 s'étendent longitudinalement selon un axe longitudinal X. Le mât 12 est ainsi configuré pour supporter le moteur 16. La nacelle 18 est annulaire et centrée sur l'axe longitudinal X.

Dans la description qui suit, les termes relatifs à une position sont pris en référence au sens de déplacement de l'aéronef lorsque la turbomachine 10 fonctionne.

La turbomachine 10 comporte un moteur 16 et la nacelle 18 qui est agencée autour du moteur 16 selon l'axe longitudinal X qui est commun au moteur 16 et à la nacelle 18. L'air pénètre dans le moteur 16 par une entrée d'air qui est entourée d'un capot d'entrée d'air 11. Le moteur 16 comporte, d'amont en aval selon la direction des flux d'air dans la nacelle 18 représentés par la flèche F, une soufflante 20 carénée par un carter de soufflante 22, et un corps 24 de moteur prévu pour, en fonctionnement, entrainer la soufflante 20 en rotation. Le corps 24 de moteur est caréné par un carter de moteur 17.

En particulier, la turbomachine 10 est une turbomachine à double flux. Les flux d'air F traversent la soufflante 20 et se séparent en un flux primaire F_{P} qui traverse le corps 24 de moteur, et en flux d'air secondaire Fs qui traverse un conduit 40 de soufflante, également appelé veine secondaire, formé autour du moteur 16. Ces flux d'air F_{S} et F_{P} se rejoignent et se mélangent ensuite au niveau de la tuyère du moteur 16.

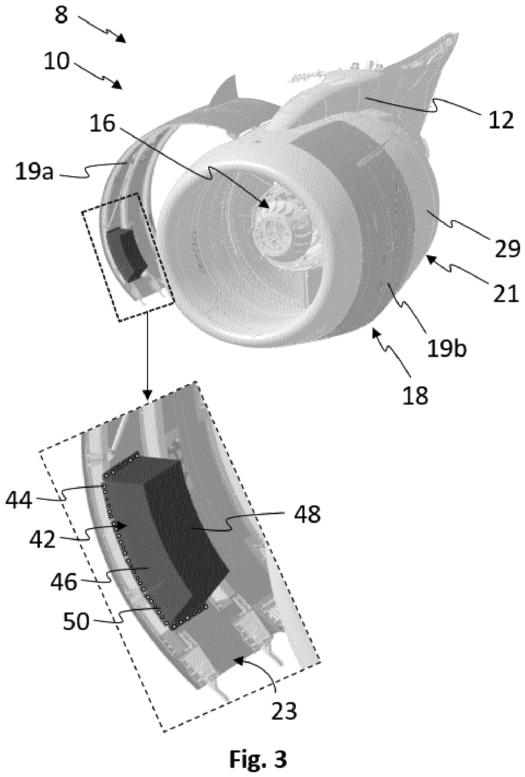

Comme représenté sur la figure 3, afin d'assurer la maintenance du moteur 16, la nacelle 18 comprend deux capots moteur 19 et deux capots inverseurs 21.

Les capots moteur 19, également appelés capot de soufflante, sont agencés autour de la partie avant du moteur 16, et plus précisément autour de la soufflante 20, et notamment autour du carter de soufflante 22. Ainsi, les capots moteur 19 matérialisent la partie avant de la nacelle 19. Chaque capot moteur 19 présente une peau interne 23.

Les capots moteur 19 ont une section transversale en forme générale de « C » et sont montés articulés sur le mât 12, par l'intermédiaire de charnières (non visibles sur les figures), et sont aptes à être reliés l'un à l'autre en position fermée. Chaque capot moteur 19 est ainsi monté mobile entre une position fermée (le capot moteur 19b est représenté en position fermée sur la figure 3) dans laquelle le capot moteur 19 est resserré autour du moteur 16 et une position ouverte dans laquelle le capot moteur 19 est écarté du moteur 16 (le capot moteur 19a est représenté en position ouverte sur la figure 3). En position fermée, les deux capots moteur 19 sont jointifs et forment globalement un cylindre qui entoure le moteur 16. Les capots moteur 19 sont verrouillés en position fermée par des verrous (non représentés sur les figures).

Les capots inverseurs 21 suivent les capots moteur 19 le long de l'axe longitudinal X. Ainsi, les capots inverseurs 21 matérialisent la partie arrière de la nacelle 19. Les capots inverseurs 21 sont agencés autour du corps 24 de moteur. Chaque capot inverseur 21 comporte un capot intérieur 27 (également appelés IFS pour « Internai Fixed Structure » en terminologie Anglo-Saxonne) et un capot extérieur 29 (également appelés OS pour « Outer Structure » en terminologie Anglo-Saxonne). Les capots intérieurs 27 sont radialement plus proches de l'axe X que les capots extérieurs 29. Les capots intérieurs 27 sont agencés autour du moteur 16 et les capots extérieurs 29 sont agencés autour des capots intérieurs 27. Chaque capot intérieur 27 présente une peau interne 31 orientée vers le moteur 16. Pour chaque capot inverseur 21, le capot intérieur 27 est solidaire du capot extérieur 29.

Les capots inverseurs 21 sont montés articulés sur le mât 12, par l'intermédiaire de charnières (non visibles sur les figures), et sont aptes à être reliés l'un à l'autre en position fermée.

Plus précisément, chaque capot intérieur 27 est monté articulé sur le mât 12 par l'intermédiaire d'au moins une charnière (non visible sur les figures) et est mobile entre une position fermée dans laquelle le capot intérieur 27 est resserré autour du moteur 16 et une position ouverte dans laquelle le capot intérieur 27 est écarté du moteur 16.

Chaque capot extérieur 29 est monté articulé sur le mât 12 par l'intermédiaire d'au moins une charnière (non visible sur les figures) et est mobile entre une position fermée dans laquelle le capot extérieur 29 est resserré autour du capot intérieur 27 associé et donc du moteur 16 et une position ouverte dans laquelle le capot extérieur 29 est écarté du moteur 16.

En position fermée, les deux capots intérieurs 27 sont jointifs et forment globalement un cylindre qui entoure le moteur 16 et constituent une partie interne de la veine secondaire 40, et les deux capots extérieurs 29 forment globalement un cylindre qui entoure les capots intérieurs 27 et constituent une partie externe de la veine secondaire 40. Ainsi, en position fermée, les capots inverseurs 21 délimitent la zone du corps 24 de moteur située entre le carter de moteur 17 et les peaux internes des capots intérieurs 27,qui est une zone feu moteur, et délimitent la veine secondaire 40 dans laquelle s'écoule le flux secondaire Fs.

Les capots inverseurs 21 sont verrouillés en position fermée par des verrous (non représentés sur les figures).

Les capots moteur et inverseurs selon l'invention ne sont pas décrits plus en détails car ces capots sont identiques aux capots moteur et inverseurs de l'art antérieur.

De manière conventionnelle, et comme représenté sur les figures 1 et 2, le moteur 16 de la turbomachine 10 présente plusieurs zones dans lesquelles un feu est susceptible de naître : une première zone feu 26 correspondant à la zone du corps 24 de moteur et une deuxième zone feu 28 correspondant à la zone de la soufflante 20.

La turbomachine 10 est également munie d'un système de détection (non représenté sur les figures) et d'un système d'extinction 30 d'un feu moteur, qui ne sont pas détaillés car identiques à ceux de l'art antérieur.

Selon un mode de réalisation de l'invention représenté sur les figures 1 et 3, au moins un des capots moteur 19 comprend un ou plusieurs caissons 42a, 42b, 42c, le ou chaque caisson 42 étant agencé dans un espace situé entre la peau interne 23 du capot moteur 19 et le moteur 16. Plus précisément, un caisson 42 est agencé dans un espace situé entre la peau interne 23 du capot moteur 19 et le carter de soufflante 22.

Chaque caisson 42 délimite un volume de matière inerte. La matière inerte peut être gazeuse ou solide. Selon un mode de réalisation, chaque caisson 42 est rempli uniquement d'air. Selon un autre mode de réalisation, chaque caisson 42 est rempli de mousse ignifugée, c'est-à-dire de mousse ininflammable. Ce ou ces caissons 42 permettent de réduire le volume de la deuxième zone feu 28. En effet, aucun fluide et aucune flamme ne peut pénétrer dans un caisson 42.

Comme chaque capot moteur 19 est mobile jusqu'à une position dans laquelle le capot moteur 19 est écarté du moteur 16, le ou chaque caisson 42 est avantageusement directement accessible et peut être inspecté en ouvrant le ou les capots moteur 19.

Comme représenté sur la figure 1, plusieurs caissons 42a, 42b sont arrangés sur la peau interne 23 du capot moteur 19, le long de l'axe longitudinal X. Les caissons 42a, 42b sont agencés l'un à côté de l'autre, à distance l'un de l'autre.

Comme représenté sur la figure 1, plusieurs caissons 42a, 42c sont arrangés sur la peau interne 23 du capot moteur 19, radialement autour de l'axe longitudinal X. Autrement dit, les caissons 42a, 42c sont agencés sur toute la circonférence des capots moteur 19.

Selon un mode de réalisation représenté en figure 3, un caisson 42 est formé en un matériau métallique, par exemple en une tôle pliée et soudée. Un caisson 42 est réalisé en matériau composite ou en alliage métallique.

Selon un autre mode de réalisation, un caisson 42 est formé par emboutissage.

Le caisson 42 comporte des parois latérales 46 qui s'étendent depuis la peau interne 23 du capot moteur 19 radialement en direction de l'axe X, et qui sont toutes reliées à une paroi supérieure 48. La paroi supérieure 48 est sensiblement parallèle à la peau interne 23 du capot moteur 19. Sur la figure 3, en position fermée du capot moteur 19, la paroi supérieure 48 s'étend radialement autour de l'axe X, c'est-à-dire sur un secteur angulaire centré sur l'axe X. Les parois latérales 46 sont également chacune reliées à des bords 50. Les bords 50 sont sensiblement parallèles à la peau interne 23 du capot moteur 19. Les bords 50 sont fixés, de manière amovible, sur la peau interne 23 du capot moteur 19, par exemple au moyen de vis 44 et d'écrous (non visibles sur les figures). Les bords 50 du caisson 42 peuvent également être rivetés sur la peau interne 23 du capot moteur 19. Avantageusement, le caisson est ainsi démontable et facilement remplaçable en cas de dommages.

Selon un mode de réalisation préféré, la liaison entre les bords 50 du caisson 42 et la peau interne 23 du capot moteur 19 est étanche. Chaque caisson 42 est fixé au capot moteur 19 par des fixations espacées d'un faible pas. Un pas serré entre les fixations permet d'empêcher l'intrusion de fluides inflammables ou de flammes dans le caisson 42. Ceci permet ainsi de sortir le volume délimité par le caisson 42 d'une zone feu, et donc de ségréguer le caisson 42 de la zone feu. Chaque caisson 42 est ainsi rendu étanche par sa fixation au capot moteur 19.

Selon un autre mode de réalisation, le ou chaque caisson 42 est étanche et comporte au moins un joint (non représenté sur les figures) disposé entre chaque bord 50 du caisson 42 et la peau interne 23 du capot moteur 19. Des joints (non représentés sur les figures) peuvent également être présents au niveau de chaque jonction entre deux parois latérales 46, ou au niveau de chaque jonction entre une paroi latérale 46 et la paroi supérieure 48.

La forme générale du ou des caissons 42 est fonction de l'installation des équipements, canalisations ou harnais du moteur 16. Sur la figure 3, le caisson 42 a la forme d'une portion annulaire, puisque le caisson 42 est fixé sur la peau interne 23 du capot moteur 19 qui est de forme annulaire. Bien entendu, un caisson peut présenter toute autre forme géométrique adaptée à l'environnement dans lequel le caisson est destiné à être agencé. Par exemple, sur la figure 3, la paroi supérieure 48 du caisson 42 est représentée comme étant convexe. Bien entendu, la paroi supérieure 48 du caisson 42 peut également être plane, ou concave, ou encore présenter des ondulations, en fonction de l'environnement dans lequel le caisson 42 est agencé.

Comme représenté sur la figure 1, un jeu J s'étend entre un caisson 42a-c, et notamment sa paroi supérieure 48, et le carter de la soufflante 22. Ce jeu permet d'éviter que le caisson 42 ne soit endommagé en cas de perte d'une pale de la soufflante 20. En effet, un feu moteur peut être consécutif à une perte d'une pale de la soufflante 20, qui aurait endommagé le carter de la soufflante 22. Afin de conserver la fonctionnalité du caisson 42, c'est-à-dire de délimiter un volume de matière inerte, le jeu J permet de tenir compte d'une déformation potentielle du carter de soufflante 22, et permet donc d'éviter que le caisson 42 et le carter de soufflante 22 n'entrent en contact (ce qui pourrait percer le caisson 42). Le jeu J dépend donc du moteur 16 et des déformations possibles du carter de soufflante 22 lors d'une perte de pâle, celle-ci dépendant, de façon non limitative, de la matière et de la raideur du carter de soufflante, ou de la masse de la pâle perdue.

Selon un autre mode de réalisation représenté sur la figure 2, au moins un des capots inverseurs 21 comprend un ou plusieurs caissons 42d, 42e, 42f, le ou chaque caisson 42d-f étant agencé dans un espace situé entre la peau interne 31 du capot intérieur 27 du capot inverseur 21 et le moteur 16. Plus précisément, un caisson 42d-f est agencé dans un espace situé entre la peau interne 31 du capot intérieur 27 du capot inverseur 21 et le carter de moteur 17. Chaque caisson 42d-f délimite un volume de matière inerte. Chaque caisson 42 permet de réduire le volume de la première zone feu 26.

Les caractéristiques décrites précédemment pour le ou les caissons 42 agencés dans un espace situé entre la peau interne 23 d'un capot moteur 19 et le carter de soufflante 22 s'appliquent également pour le ou les caissons 42d-f agencés dans un espace situé entre la peau interne 31 d'un capot intérieur 27 d'un capot inverseur 21 et le carter de moteur 17.

Comme chaque capot inverseur 21 est mobile jusqu'à une position dans laquelle le capot inverseur 21 est écarté du moteur 16, le ou chaque caisson 42d-f est avantageusement directement accessible et peut être inspecté en ouvrant le ou les capots inverseurs 21. Plus précisément, les capots intérieurs 27 et extérieurs 29 d'un capot inverseur 21 étant solidaires l'un de l'autre, le ou chaque caisson 42d-f fixé sur la peau interne 31 du capot intérieur 27 est directement accessible en ouvrant le capot extérieur 29.

Comme représenté sur la figure 2, plusieurs caissons 42e, 42f sont arrangés sur la peau interne 31 du capot intérieur 27 du capot inverseur 21, le long de l'axe longitudinal X. Les caissons 42e-f sont agencés l'un à côté de l'autre, à distance l'un de l'autre, sur la peau interne 31 du capot intérieur 27.

Comme représenté sur la figure 2, plusieurs caissons 42d, 42f sont arrangés sur la peau interne 31 du capot intérieur 27 du capot inverseur 21, radialement autour de l'axe longitudinal X. Autrement dit, les caissons 42d, 42f sont agencés sur toute la circonférence du capot intérieur 27.

Selon un mode de réalisation non représenté sur les figures, le ou chaque caisson 42 est formé en une seule pièce avec un capot moteur 19 de la nacelle 18. Autrement dit, le ou chaque caisson 42 et un capot moteur 19 sont monoblocs.

Selon un mode de réalisation non représenté sur les figures, le ou chaque caisson 42 est formé en une seule pièce avec un capot inverseur 21 de la nacelle 18. Autrement dit, le ou chaque caisson 42 et un capot inverseur 21 sont monoblocs.

Selon l'invention, grâce au caisson agencé dans un espace entre le moteur et une peau interne d'un capot de la nacelle, qui est une zone feu moteur, un feu ne peut plus pénétrer dans le volume définit par le caisson, et le volume de la zone feu du moteur est donc réduit par rapport aux moteurs de l'art antérieur. Ce caisson permet donc de réduire les dimensions et la masse des réservoirs d'agent d'extinction embarqués sur l'aéronef.

## Revendications

1. Ensemble propulsif (8) pour aéronef comprenant un moteur (16), une nacelle (18) agencée autour du moteur (16) selon un axe longitudinal (X) commun, et un mât (12) supportant le moteur (16), la nacelle (18) incluant deux capots moteur (19) de section transversale en forme générale de « C » articulés sur le mât (12) et aptes à être reliés l'un à l'autre en position fermée, et des capots inverseurs (21) suivant les capots moteur (19) le long de l'axe longitudinal (X), chaque capot (19, 21) présentant une peau interne (23, 31), **caractérisé en ce que** l'un au moins des capots (19, 21) de la nacelle (18) comprend au moins un caisson (42) agencé dans un espace situé entre la peau interne (23, 31) dudit capot (19, 21) et le moteur (16), le caisson (42) délimitant un volume de matière inerte, la matière inerte étant de la mousse ignifugée.

2. Ensemble propulsif (8) selon la revendication 1, **caractérisé en ce que** le au moins un caisson (42) est formé par une tôle pliée et soudée, et comporte des bords (50) qui sont fixés de manière amovible sur la peau interne (23, 31) du capot (19, 21) de la nacelle (18).

3. Ensemble propulsif (8) selon la revendication 2, **caractérisé en ce que** la liaison entre les bords (50) du caisson (42) et la peau interne (23, 31) du capot (19, 21) de la nacelle (18) est étanche.

4. Ensemble propulsif (8) selon la revendication 1, **caractérisé en ce que** le caisson (42) et le capot (19, 21) de la nacelle (18) sont monoblocs.

## Patentansprüche

1. Antriebsanordnung (8) für ein Luftfahrzeug, umfassend ein Triebwerk (16), eine um das Triebwerk (16) entlang einer gemeinsamen Längsachse (X) angeordnete Triebwerksgondel (18) und einen das Triebwerk (16) tragenden Mast (12), wobei die Triebwerksgondel (18) zwei Triebwerkshauben (19) mit allgemein C-förmigem Querschnitt, die an dem Mast (12) angelenkt sind und in der geschlossenen Position miteinander verbunden werden können, und Schubumkehrerhauben (21) aufweist, die den Triebwerkshauben (19) entlang der Längsachse (X) folgen, wobei jede Haube (19, 21) eine Innenhaut (23, 31) aufweist, **dadurch gekennzeichnet, dass** mindestens eine der Hauben (19, 21) der Triebwerksgondel (18) mindestens einen Kasten (42) umfasst, der in einem Raum zwischen der Innenhaut (23, 31) der Haube (19, 21) und dem Triebwerk (16) angeordnet ist, wobei der Kasten (42) ein Volumen aus inertem Material begrenzt, wobei das inerte Material schwerentflammbarer Schaumstoff ist.

2. Antriebsanordnung (8) nach Anspruch 1, **dadurch gekennzeichnet, dass** der mindestens eine Kasten (42) aus einem gebogenen und geschweißten Blech gebildet ist und Ränder (50) aufweist, die entfernbar an der Innenhaut (23, 31) der Haube (19, 21) der Triebwerksgondel (18) befestigt sind.

3. Antriebsanordnung (8) nach Anspruch 2, **dadurch gekennzeichnet, dass** die Verbindung zwischen den Rändern (50) des Kastens (42) und der Innenhaut (23, 31) der Haube (19, 21) der Triebwerksgondel (18) dicht ist.

4. Antriebsanordnung (8) nach Anspruch 1, **dadurch gekennzeichnet, dass** der Kasten (42) und die Haube (19, 21) der Triebwerksgondel (18) einteilig sind.

## Claims

1. Propulsive assembly (8) for aircraft comprising an engine (16), a nacelle (18) arranged around the engine (16) on a common longitudinal axis (X), and a pylon (12) supporting the engine (16), the nacelle (18) including two engine cowls (19) of generally "C"-shaped cross section articulated on the pylon (12) and that can be linked to one another in the closed position, and reversing cowls (21) following the engine cowls (19) along the longitudinal axis (X), each cowl (19, 21) having an internal skin (23, 31), **characterized in that** at least one of the cowls (19, 21) of the nacelle (18) comprises at least one box (42) arranged in a space situated between the internal skin (23, 31) of said cowl (19, 21) and the engine (16), the box (42) delimiting a volume of inert material, the inert material being flame retardant foam.

2. Propulsive assembly (8) according to Claim 1, **characterized in that** the at least one box (42) is formed by a folded and welded steel sheet, and comprises edges (50) which are fixed removably onto the internal skin (23, 31) of the cowl (19, 21) of the nacelle (18).

3. Propulsive assembly (8) according to Claim 2, **characterized in that** the link between the edges (50) of the box (42) and the internal skin (23, 31) of the cowl (19, 21) of the nacelle (18) is tight.

4. Propulsive assembly (8) according to Claim 1, **characterized in that** the box (42) and the cowl (19, 21) of the nacelle (18) are single-piece parts.
